# EUROPEAN PATENT APPLICATION

(11) **EP 4 622 133 A1**
(43) Date of publication of application: **24.09.2025**
(21) Application number: 22966828.0
(22) Date of filing: 30.11.2022
(51) Int. Cl.: H04B 10/079, H04B 10/071

(54) **SIGNAL PROCESSING METHOD AND RELATED DEVICE**

(71) Applicant: Huawei Technologies Co., Ltd., Shenzhen, Guangdong 518129 (CN)
(72) Inventor: WANG, Cheng, Shenzhen, Guangdong 518129 (CN); DING, Ding, Shenzhen, Guangdong 518129 (CN); LAN, Yu, Shenzhen, Guangdong 518129 (CN); FENG, Jia, Shenzhen, Guangdong 518129 (CN); WANG, Hui, Shenzhen, Guangdong 518129 (CN)
(74) Representative: Maiwald GmbH
(86) International application number: PCT/CN2022/135485
(87) International publication number: WO 2024/113235

(57) **Abstract**

This application provides a signal processing method and a related device, so that when a fault occurs on a network link, an optical module can determine, in a process of receiving and sending a detection signal and a response signal, a faulty optical component on the link, to improve processing efficiency of fault locating and reduce operation and maintenance costs. In the method, the optical module sends a detection signal, where the detection signal is carried on a link between a first module and a second module, and the link includes one or more optical components. The optical module receives a response signal of the detection signal, where the response signal is used to determine fault information of the link, and the fault information of the link indicates a faulty optical component in the one or more optical components.

## Description

### TECHNICAL FIELD

This application relates to the communication field, and in particular, to a signal processing method and a related device.

### BACKGROUND

As wireless communication technologies develop from 2G, 3G, and 4G to 5G, future 6G, and the like, network communication standards also continuously evolve, and requirements on bearer capabilities of network devices are increasingly high.

Currently, a longer networking chain may be configured in a network device, to enhance a bearer capability of a network device. An increase in a length of a networking chain in the network device may cause an increase in occurrence frequency of network faults.

However, when a fault occurs, because a component that is in the network device and that is configured to transmit/process a signal is usually a passive component, active fault locating cannot be performed, and further manual fault rectification is needed. Consequently, fault processing time is long, and operation and maintenance costs are greatly increased.

### SUMMARY

This application provides a signal processing method and a related device, so that when a fault occurs on a network link, an optical module can determine, in a process of receiving and sending a detection signal and a response signal, a faulty optical component on the link, to improve processing efficiency of fault locating and reduce operation and maintenance costs.

A first aspect of this application provides a signal processing method. The method is applied to an optical module having optical signal receiving and sending functions. The method is performed by the optical module, the method is performed by some components (for example, a processor, a chip, or a chip system) in the optical module, or the method may be implemented by a logical module or software that can implement all or some functions of the optical module. In the first aspect and the possible implementations of the first aspect, an example in which the method is performed by the optical module is used for description. In the method, the optical module sends a detection signal, where the detection signal is carried on a link between a first module and a second module, and the link includes one or more optical components. The optical module receives a response signal of the detection signal, where the response signal is used to determine fault information of the link, and the fault information of the link indicates a faulty optical component in the one or more optical components.

According to the foregoing technical solution, after the optical module sends the detection signal carried on the link between the first module and the second module, the response signal received by the optical module is used to determine the fault information of the link. The link includes one or more optical components, and the fault information of the link indicates the faulty optical component in the one or more optical components. In this way, when a fault occurs on a network link, the optical module can determine, in a process of receiving and sending the detection signal and the response signal, the faulty optical component on the link, to improve processing efficiency of fault locating and reduce operation and maintenance costs.

In a possible implementation of the first aspect, that the response signal is used to determine fault information of the link includes: The fault information of the link is determined based on a signal feature of the response signal and target information, where the target information includes association information between a fault of one or more optical components and a signal feature.

Based on the foregoing technical solution, in addition to the response signal, a determining basis of the fault information of the link may further include the target information, and the target information includes the association information between the fault of the one or more optical components and the signal feature, so that the faulty optical component is located based on the signal feature of the response signal and with reference to the association information.

In a possible implementation of the first aspect, the first module is a radio frequency module in a network device, and the second module is a processing module in the network device.

Based on the foregoing technical solution, when the first module is the radio frequency module in the network device, and the second module is the processing module in the network device, a link on which the optical module performs detection may be a link between a radio frequency module and a processing module in a same network device, so that the technical solution can be applied to a scenario of locating a fault on a communication link between different modules in a same network device.

Optionally, the processing module is a baseband unit (baseband unit, BBU).

Optionally, the radio frequency module is any one of the following: a radio remote unit (radio remote unit, RRU), an active antenna unit (active antenna unit, AAU), or a remote relay node (remote relay node, RRN). Further, optionally, when the radio frequency module is an RRU or an AAU, the link on which the optical module performs detection may be referred to as a fronthaul link.

Optionally, the link on which the optical module performs detection may further include a midhaul link (for example, a link between a CU and a DU), a backhaul link (for example, a link between the CU and a core network device, or a link between a BBU and the core network device), and the like.

Optionally, the technical solutions provided in this application may be further applied to a detection process of another link, for example, may be applied to a link between any two of an optical line termination (optical line termination, OLT), an optical distribution network (optical distribution network, ODN), and an optical network apparatus (optical network terminal, ONT) in an optical access network. In other words, the first module and the second module are respectively two different modules in the OLT, the ODN, and the ONT. Correspondingly, in the optical access network, the optical components between the first module and the second module may include but are not limited to a fiber distribution terminal, an optical splitter, a fiber access terminal, and the like.

Optionally, the radio frequency module is configured to process a radio frequency signal. The radio frequency module may be replaced with a radio frequency signal processing module, a radio frequency link module, a radio frequency processing module, or the like, or may have another name. This is not limited herein. Similarly, the processing module is configured to process a baseband signal. The processing module may be replaced with a baseband signal processing module, a baseband processing module, or the like, or may have another name. This is not limited herein.

Optionally, the processing module may alternatively be implemented in another manner. For example, the processing module is a network management device (for example, an operation management center (Operation Management Center, OMC) or a base station control unit), or the processing module is a management/control device externally connected to the optical module. This is not limited herein.

In a possible implementation of the first aspect, the one or more optical components include at least one of the following: a flange, a wavelength division component, or an optical fiber line.

It may be understood that the one or more optical components are configured to perform transmission of an optical signal/process an optical signal. In addition to the at least one of the foregoing, the one or more optical components may further include another component, for example, a flexible connector, a fiber splicing point, a multiplexer, a demultiplexer, or a distribution frame. This is not limited herein.

In a possible implementation of the first aspect, the method further includes: The optical module sends a first signal, where the first signal indicates at least one of the following: the response signal, a processing result obtained by performing signal preprocessing on the response signal, or the fault information.

Based on the foregoing technical solution, after receiving the response signal, the optical module may further send the first signal associated with the response signal, so that after receiving the first signal, a receiving party of the first signal can implement fault locating based on the first signal, and subsequently may further perform a fault rectification operation based on a located fault, to eliminate or reduce impact of the fault.

In a possible implementation of the first aspect, the signal preprocessing includes at least one of the following: noise removal, filtering, or signal combination.

It may be understood that the signal preprocessing is used to perform preprocessing other than fault locating on the response signal received by the optical module. In addition to the at least one of the foregoing, the preprocessing may further include signal smoothing processing or another implementation. This is not limited herein.

In a possible implementation of the first aspect, the detection signal is generated based on a target parameter, where the target parameter is from a processing module in the network device or a network management device; or the target parameter is determined based on a user operation instruction.

Based on the foregoing technical solution, the target parameter used to generate the detection signal may be implemented in the foregoing plurality of manners, so that the optical module sends a specified detection signal based on another device or the user operation instruction, to achieve a detection target of the specified detection signal.

Optionally, the target parameter may be a parameter preconfigured in the optical module.

In a possible implementation of the first aspect, the target parameter indicates at least one of the following: a first parameter, indicating a detection range; a second parameter, indicating a detection pulse width; or a third parameter, indicating detection duration.

Optionally, the target parameter is used to generate the detection signal. The at least one of the foregoing is merely an implementation example of the target parameter. During actual application, the target parameter may further include another implementation. For example, the target parameter indicates detection power, a wavelength of the detection signal, or a frequency of the detection signal.

In a possible implementation of the first aspect, the target parameter is determined based on the target information and/or a historical response signal, where the target information includes the association information between the fault of the one or more optical components and the signal feature.

Based on the foregoing technical solution, when the target parameter is determined based on the target information, the optical module can send the specified detection signal based on the target information, to achieve the detection target of the specified detection signal. In addition, when the target parameter is determined based on the historical response signal, the optical module can adjust and optimize a detection signal sending process based on a detection result indicated by the historical response signal, to obtain an expected detection response.

In a possible implementation of the first aspect, the detection signal is a signal whose sending is triggered based on a periodicity, and/or the detection signal is a signal whose sending is triggered based on an event.

Based on the foregoing technical solution, the optical module may trigger the sending of the detection signal in either of the foregoing manners, to improve flexibility of implementing the solution.

In a possible implementation of the first aspect, the method is applied to the optical module, where the optical module is a submodule in the first module, the optical module is a submodule in the second module, or the optical module is an optical time-domain reflectometer (optical time-domain reflectometer, OTDR).

It may be understood that the optical module is configured to send the detection signal and receive the response signal corresponding to the detection signal. In addition to the foregoing implementations, the optical module may alternatively be an optical fiber detection device (or referred to as an optical signal detection device) independent of the first module and the second module, or there may be another implementation. This is not limited herein.

A second aspect of this application provides a signal processing method. The method is performed by a processing module, the method is performed by some components (for example, a processor, a chip, or a chip system) in the processing module, or the method may be implemented by a logical module or software that can implement all or some functions of the processing module. In the second aspect and the possible implementations of the second aspect, an example in which the method is performed by the processing module is used for description. In the method, the processing module receives a first signal, where the first signal indicates at least one of the following: a response signal, where the response signal is a response to a detection signal, the detection signal is carried on a link between a first module and a second module, the link includes one or more optical components, the response signal is used to determine fault information of the link, and the fault information of the link indicates that a fault occurs on the one or more optical components; a processing result obtained by performing signal preprocessing on the response signal; or the fault information.

Based on the foregoing technical solution, the first signal received by the processing module indicates the at least one of the foregoing, so that after receiving the first signal, the processing module can determine the fault information of the link between the first module and the second module based on the first signal. The link includes one or more optical components, and the fault information of the link indicates a faulty optical component in the one or more optical components. In this way, when a fault occurs on a network link, an optical module can determine, in a process of receiving and sending the detection signal and the response signal, the faulty optical component on the link, to improve processing efficiency of fault locating and reduce operation and maintenance costs.

In a possible implementation of the second aspect, the method further includes: The processing module sends first information, where the first information indicates to perform a fault rectification operation on the one or more optical components indicated by the fault information.

Based on the foregoing technical solution, after receiving the first signal and determining the fault information, the processing module may further send the first information indicating the one or more optical components indicated by the fault information to perform the fault rectification operation, so that a receiving party of the first information performs fault rectification based on the first information.

In a possible implementation of the second aspect, the fault rectification operation includes reset, shutdown, or restart.

It may be understood that, the first information indicates to perform the fault rectification operation on the one or more optical components indicated by the fault information. When the receiving party of the first information is the faulty optical component (or a controller/management device of the faulty optical component), the fault rectification operation includes controlling the faulty optical component to perform reset, shutdown, restart, or the like. When the receiving party of the first information is another component (for example, a standby component), the fault rectification operation includes controlling the another component to perform reset, startup, or the like.

In a possible implementation of the second aspect, that the response signal is used to determine fault information of the link includes: The fault information of the link is determined based on a signal feature of the response signal and target information, where the target information includes association information between a fault of one or more optical components and a signal feature.

Based on the foregoing technical solution, in addition to the response signal, a determining basis of the fault information of the link may further include the target information, and the target information includes the association information between the fault of the one or more optical components and the signal feature, so that the faulty optical component is located based on the signal feature of the response signal and with reference to the association information.

In a possible implementation of the second aspect, the first module is a radio frequency module in a network device, and the second module is a processing module in the network device.

Based on the foregoing technical solution, when the first module is the radio frequency module in the network device, and the second module is the processing module in the network device, a link on which the optical module performs detection may be a link between a radio frequency module and a processing module in a same network device, so that the technical solution can be applied to a scenario of locating a fault on a communication link between different modules in a same network device.

Optionally, the radio frequency module is configured to process a radio frequency signal. The radio frequency module may be replaced with a radio frequency signal processing module, a radio frequency link module, a radio frequency processing module, or the like, or may have another name. This is not limited herein. Similarly, the processing module is configured to process a baseband signal. The processing module may be replaced with a baseband signal processing module, a baseband processing module, or the like, or may have another name. This is not limited herein.

Optionally, the processing module may alternatively be implemented in another manner. For example, the processing module is a network management device (for example, an OMC or a base station control unit), or the processing module is a management/control device externally connected to the optical module. This is not limited herein.

In a possible implementation of the second aspect, the one or more optical components include at least one of the following: a flange, a wavelength division component, or an optical fiber line.

It may be understood that the one or more optical components are configured to perform transmission of an optical signal/process an optical signal. In addition to the at least one of the foregoing, the one or more optical components may further include another component, for example, a flexible connector, a fiber splicing point, a multiplexer, a demultiplexer, or a distribution frame. This is not limited herein.

In a possible implementation of the second aspect, the signal preprocessing includes at least one of the following: noise removal, filtering, or signal combination.

It may be understood that the signal preprocessing is used to perform preprocessing other than fault locating on the response signal received by the optical module. In addition to the at least one of the foregoing, the preprocessing may further include signal smoothing processing or another implementation. This is not limited herein.

In a possible implementation of the second aspect, the detection signal is generated based on a target parameter, where the target parameter is from a processing module in the network device or a network management device; or the target parameter is determined based on a user operation instruction.

Based on the foregoing technical solution, the target parameter used to generate the detection signal may be implemented in the foregoing plurality of manners, so that the optical module sends a specified detection signal based on another device or the user operation instruction, to achieve a detection target of the specified detection signal.

Optionally, the target parameter may be a parameter preconfigured in the optical module.

In a possible implementation of the second aspect, the target parameter indicates at least one of the following: a first parameter, indicating a detection range; a second parameter, indicating a detection pulse width; or a third parameter, indicating detection duration.

Optionally, the target parameter is used to generate the detection signal. The at least one of the foregoing is merely an implementation example of the target parameter. During actual application, the target parameter may further include another implementation. For example, the target parameter indicates detection power, a wavelength of the detection signal, or a frequency of the detection signal.

In a possible implementation of the second aspect, the target parameter is determined based on the target information and/or a historical response signal, where the target information includes the association information between the fault of the one or more optical components and the signal feature.

Based on the foregoing technical solution, when the target parameter is determined based on the target information, the optical module can send the specified detection signal based on the target information, to achieve the detection target of the specified detection signal. In addition, when the target parameter is determined based on the historical response signal, the optical module can adjust and optimize a detection signal sending process based on a detection result indicated by the historical response signal, to obtain an expected detection response.

In a possible implementation of the second aspect, the detection signal is a signal whose sending is triggered based on a periodicity, and/or the detection signal is a signal whose sending is triggered based on an event.

Based on the foregoing technical solution, the optical module may trigger the sending of the detection signal in either of the foregoing manners, to improve flexibility of implementing the solution.

In a possible implementation of the second aspect, the method is applied to the optical module, where the optical module is a submodule in the first module, the optical module is a submodule in the second module, or the optical module is an optical time-domain reflectometer OTDR.

It may be understood that the optical module is configured to send the detection signal and receive the response signal corresponding to the detection signal. In addition to the foregoing implementations, the optical module may alternatively be an optical fiber detection device (or referred to as an optical signal detection device) independent of the first module and the second module, or there may be another implementation. This is not limited herein.

A third aspect of this application provides a communication apparatus. The communication apparatus can implement the method in any one of the first aspect or the possible implementations of the first aspect. The communication apparatus includes a corresponding unit or module configured to perform the foregoing method. The unit or module included in the communication apparatus may be implemented by software and/or hardware. For example, the apparatus may be an optical module, the apparatus may be a component (for example, a processor, a chip, or a chip system) in the optical module, or the apparatus may be a logical module or software that can implement all or some functions of the optical module.

The communication apparatus includes a processing unit and a transceiver unit. The processing unit is configured to determine a detection signal, where the detection signal is carried on a link between a first module and a second module, and the link includes one or more optical components. The transceiver unit is configured to send the detection signal. The transceiver unit is further configured to receive a response signal of the detection signal, where the response signal is used to determine fault information of the link, and the fault information of the link indicates a faulty optical component in the one or more optical components.

In a possible implementation of the third aspect, that the response signal is used to determine fault information of the link includes: The fault information of the link is determined based on a signal feature of the response signal and target information, where the target information includes association information between a fault of one or more optical components and a signal feature.

In a possible implementation of the third aspect, the first module is a radio frequency module in a network device, and the second module is a processing module in the network device.

In a possible implementation of the third aspect, the one or more optical components include at least one of the following: a flange, a wavelength division component, or an optical fiber line.

In a possible implementation of the third aspect, the transceiver unit is further configured to send a first signal, where the first signal indicates at least one of the following: the response signal, a processing result obtained by performing signal preprocessing on the response signal, or the fault information.

In a possible implementation of the third aspect, the signal preprocessing includes at least one of the following: noise removal, filtering, or signal combination.

In a possible implementation of the third aspect, the detection signal is generated based on a target parameter, where the target parameter is from a processing module in the network device or a network management device; or the target parameter is determined based on a user operation instruction.

In a possible implementation of the third aspect, the target parameter indicates at least one of the following: a first parameter, indicating a detection range; a second parameter, indicating a detection pulse width; or a third parameter, indicating detection duration.

In a possible implementation of the third aspect, the target parameter is determined based on the target information and/or a historical response signal, where the target information includes the association information between the fault of the one or more optical components and the signal feature.

In a possible implementation of the third aspect, the method is applied to the optical module, where the optical module is a submodule in the first module, the optical module is a submodule in the second module, or the optical module is an optical time-domain reflectometer OTDR.

A fourth aspect of this application provides a communication apparatus. The communication apparatus can implement the method in any one of the second aspect or the possible implementations of the second aspect. The communication apparatus includes a corresponding unit or module configured to perform the foregoing method. The unit or module included in the communication apparatus may be implemented by software and/or hardware. For example, the apparatus may be a processing module, the apparatus may be a component (for example, a processor, a chip, or a chip system) in the processing module, or the apparatus may be a logical module or software that can implement all or some functions of the processing module.

The communication apparatus includes a transceiver unit. The transceiver unit is configured to receive a first signal, where the first signal indicates at least one of the following: a response signal, where the response signal is a response to a detection signal, the detection signal is carried on a link between a first module and a second module, the link includes one or more optical components, the response signal is used to determine fault information of the link, and the fault information of the link indicates that a fault occurs on the one or more optical components; a processing result obtained by performing signal preprocessing on the response signal; or the fault information.

In a possible implementation of the fourth aspect, the apparatus further includes a processing unit. The processing unit is configured to determine first information. The transceiver unit is further configured to send the first information, where the first information indicates to perform a fault rectification operation on the one or more optical components indicated by the fault information.

In a possible implementation of the fourth aspect, the fault rectification operation includes reset, shutdown, or restart.

In a possible implementation of the fourth aspect, that the response signal is used to determine fault information of the link includes: The fault information of the link is determined based on a signal feature of the response signal and target information, where the target information includes association information between a fault of one or more optical components and a signal feature.

In a possible implementation of the fourth aspect, the first module is a radio frequency module in a network device, and the second module is a processing module in the network device.

In a possible implementation of the fourth aspect, the one or more optical components include at least one of the following: a flange, a wavelength division component, or an optical fiber line.

In a possible implementation of the fourth aspect, the signal preprocessing includes at least one of the following: noise removal, filtering, or signal combination.

In a possible implementation of the fourth aspect, the detection signal is generated based on a target parameter, where the target parameter is from a processing module in the network device or a network management device; or the target parameter is determined based on a user operation instruction.

In a possible implementation of the fourth aspect, the target parameter indicates at least one of the following: a first parameter, indicating a detection range; a second parameter, indicating a detection pulse width; or a third parameter, indicating detection duration.

In a possible implementation of the fourth aspect, the target parameter is determined based on the target information and/or a historical response signal, where the target information includes the association information between the fault of the one or more optical components and the signal feature.

In a possible implementation of the fourth aspect, the method is applied to an optical module, where the optical module is a submodule in the first module, the optical module is a submodule in the second module, or the optical module is an optical time-domain reflectometer OTDR.

A fifth aspect of this application provides a communication apparatus, including at least one processor. The at least one processor is coupled to a memory; and the processor is configured to perform the method according to any one of the first aspect or the possible implementations of the first aspect, or the processor is configured to perform the method according to any one of the second aspect or the possible implementations of the second aspect.

For example, the memory is configured to store a program or instructions. The at least one processor is configured to execute the program or the instructions, to enable the apparatus to implement the method according to any one of the first aspect or the possible implementations of the first aspect, or to enable the apparatus to implement the method according to any one of the second aspect or the possible implementations of the second aspect.

A sixth aspect of this application provides a communication apparatus, including at least one logic circuit and an input/output interface. The logic circuit is configured to perform the method according to any one of the first aspect or the possible implementations of the first aspect, or the logic circuit is configured to perform the method according to any one of the second aspect or the possible implementations of the second aspect.

A seventh aspect of this application provides a computer-readable storage medium that stores one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect.

An eighth aspect of this application provides a computer program product (or referred to as a computer program). When the computer program product is executed by a processor, the processor performs the method in any one of the first aspect or the possible implementations of the first aspect, or the processor performs the method in any one of the second aspect or the possible implementations of the second aspect.

A ninth aspect of this application provides a chip system. The chip system includes at least one processor, configured to support a communication apparatus in implementing functions in any one of the first aspect or the possible implementations of the first aspect, or configured to support a communication apparatus in implementing functions in any one of the second aspect or the possible implementations of the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A tenth aspect of this application provides a communication system. The communication system includes the communication apparatus in the third aspect and the calling apparatus in the fourth aspect, the communication system includes the communication apparatus in the fifth aspect, or the communication system includes the communication apparatus in the sixth aspect.

For technical effects brought by any one of the design manners of the third aspect to the tenth aspect, refer to the technical effects brought by the first aspect or the second aspect and different design manners of the first aspect or the second aspect. Details are not described herein again.

### BRIEF DESCRIPTION OF DRAWINGS

FIG. 1 to FIG. 6 are some diagrams of application scenarios according to this application;
FIG. 7 to FIG. 9 are diagrams of a signal processing method according to this application; and
FIG. 10 to FIG. 12 are some diagrams of communication apparatuses according to this application.

### DESCRIPTION OF EMBODIMENTS

The following describes technical solutions in this application with reference to the accompanying drawings in this application. All other solutions obtained by a person of ordinary skill in the art based on this application without creative efforts shall fall within the protection scope of this application.

First, some terms in this application are described, to help a person skilled in the art have a better understanding.
(1) A terminal device may be a wireless terminal device that can receive scheduling and indication information of a network device. The wireless terminal device may be a device that provides a user with voice and/or data connectivity, a handheld device having a wireless connection function, or another processing device connected to a wireless modem.

The terminal device may communicate with one or more core networks or an internet through a radio access network (radio access network, RAN). The terminal device may be a mobile terminal device, for example, a mobile phone (or referred to as a "cellular" phone or a mobile phone (mobile phone)), a computer, or a data card. Alternatively, the terminal device may be a portable, pocket-sized, handheld, computer-built-in, or in-vehicle mobile apparatus that exchanges voice and/or data with the radio access network. Alternatively, the terminal device may be, for example, a device like a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. The terminal device may alternatively be a wearable device and a terminal device in a next generation communication system, for example, a terminal device in a 6th generation (6th Generation, 6G) communication system or a terminal device in a future evolved public land mobile network (public land mobile network, PLMN).

(2) A network device may be a device in a wireless network. For example, the network device may be a radio access network (radio access network, RAN) node (or device) that connects the terminal device to the wireless network, and may also be referred to as a base station. Some examples of the RAN device are: a next generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may be a module or a unit that implements some functions of the base station. The module or unit may be referred to as an access network module, an access network element, or an access network unit. This is not limited. For example, the network device may be a central unit (central unit, CU) node, a distributed unit (distributed unit, DU) node, or a RAN device including a CU node and a DU node. Alternatively, the network device may be a module or a unit in an open access network (open RAN, ORAN or O-RAN). For example, the network device may be a CU, a DU, a CU-CP, a CU-UP, or a radio unit (radio unit, RU) in the O-RAN.

In some implementations, the network device may further include a satellite, aircraft, and the like.

In addition, in another possible case, the network device may be another apparatus that provides a wireless communication function for the terminal device. A specific technology and a specific device form that are used by the network device are not limited in this application. For ease of description, this is not limited in this application.

Optionally, the network device may further include a core network device. The core network device includes, for example, an access and mobility management function (access and mobility management function, AMF), a user plane function (user plane function, UPF), a session management function (session management function, SMF), or the like.

In this application, an apparatus configured to implement functions of the network device may be a network device, or may be an apparatus, for example, a processor, a chip, or a chip system, that can support the network device in implementing the functions. The apparatus may be installed in the network device or used in combination with the network device. In the technical solutions provided in this application, the technical solutions provided in this application are described by using an example in which the apparatus configured to implement the functions of the network device is the network device.

In this application, an apparatus configured to implement functions of the terminal device may be a terminal device, or may be an apparatus, for example, a processor, a chip, or a chip system, that can support the terminal device in implementing the functions. The apparatus may be installed in the terminal device or used in combination with the terminal device. In the technical solutions provided in this application, the technical solutions provided in this application are described by using an example in which the apparatus configured to implement the functions of the terminal device is the terminal device.

(3) The terms "system" and "network" may be used interchangeably in this application. "At least one" means one or more, and "a plurality of" means two or more. "And/or" describes an association relationship between associated objects, and indicates that there may be three relationships. For example, A and/or B may indicate the following cases: Only A exists, both A and B exist, and only B exists, where A and B may be singular or plural. The character "/" generally indicates that the associated objects are in an "or" relationship. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit an order, a time sequence, priorities, or importance of the plurality of objects.

This application may be applied to a long term evolution (long term evolution, LTE) system, a new radio (new radio, NR) system, an O-RAN system, a new radio vehicle to everything (NR vehicle to everything, NR V2X) system, a system of hybrid networking of a plurality of access technologies (for example, LTE and 5G), a device-to-device (device-to-device, D2D) communication system, a machine to machine (machine to machine, M2M) communication system, an internet of things (Internet of Things, IoT), an uncrewed aerial vehicle communication system, a communication system that supports a plurality of wireless technologies, for example, a communication system that supports an LTE technology and an NR technology, or a non-terrestrial communication system, for example, a satellite communication system or a high-altitude communication platform. In addition, optionally, this application may also be applied to a narrowband-internet of things (narrowband-internet of things, NB-IoT) system, an enhanced data rate for global system for mobile communications (global system for mobile communications, GSM) evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a system to which a future-oriented communication technology is applied, or another communication system.

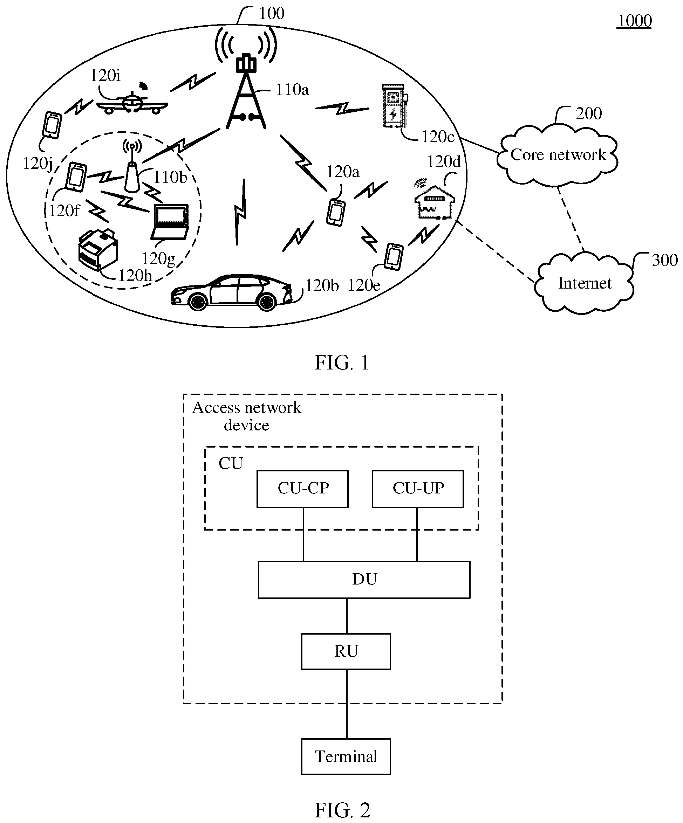

FIG. 1 is a diagram of an application scenario according to an embodiment of this application. As shown in FIG. 1, the solutions provided in this application may be applied to a communication system 1000 shown in FIG. 1. The communication system 1000 includes a radio access network (radio access network, RAN) 100 and a core network 200. The RAN 100 may include at least one access network device (for example, 110a and 110b in FIG. 1, which are collectively referred to as 110). The RAN 100 may further include at least one terminal (for example, 120a to 120j in FIG. 1, which are collectively referred to as 120). The terminals 120a to 120j are connected to the access network devices 110a and 110b in a wireless manner. The access network devices 110a and 110b are connected to the core network 200 in a wireless or wired manner. A core network device in the core network and the access network device in the radio access network may be different physical devices, or may be a same physical device that integrates a logical function of the core network and a logical function of the radio access network. This is not limited. The terminals may be connected to each other in the wireless manner. The access network devices may be connected to each other in the wired or wireless manner. FIG. 1 is merely a diagram. The communication system may further include another network device, for example, a wireless relay device and/or a wireless backhaul device (not shown in FIG. 1).

For example, in FIG. 1, the RAN 100 may be configured as a cellular system related to a 3rd generation partnership project (3rd generation partnership project, 3GPP). For example, the RAN 100 may be configured as a 4th generation (4th generation, 4G) mobile communication system, a 5th generation (5th generation, 5G) mobile communication system, a wireless fidelity (wireless fidelity, Wi-Fi) system, a future-oriented evolved system (for example, a 6G mobile communication system), or a communication system integrating at least two of the foregoing systems. 5G may also be referred to as new radio (new radio, NR). Alternatively, the RAN 100 may be configured as an open access network (open RAN, ORAN, or O-RAN).

The access network device in this application is sometimes also referred to as an access node. The access network device has a wireless transceiver function, and can communicate with the terminal.

In a possible scenario, the access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (6th generation, 6G) mobile communication system, a base station in a future mobile communication system, an access node in a Wi-Fi system, or the like. The access network device may be a macro base station (110a in FIG. 1), a micro base station or an indoor station (110b in FIG. 1), a relay node or a donor node, or a radio controller in a cloud radio access network (cloud radio access network, CRAN) scenario. Optionally, the access network device may alternatively be a server, a wearable device, a vehicle-mounted device, or the like. For example, the access network device in a vehicle to everything (vehicle to everything, V2X) technology may be a road side unit (road side unit, RSU). A plurality of access network devices in the communication system may be base stations of a same type, or may be base stations of different types. The base station may communicate with the terminal, or may communicate with the terminal through a relay station. The terminal may communicate with a plurality of base stations in different access technologies.

In another possible scenario, the access network device may be a module, a unit, a circuit, or the like that can implement some functions of the base station. The device may also be referred to as an access network module, an access network element, an access network unit, or the like. This is not limited. For example, the access network device may be a central unit (central unit, CU), a distributed unit (distributed unit, DU), a CU-control plane (control plane, CP), a CU-user plane (user plane, UP), or a radio unit (radio unit, RU). In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. The CU (or the CU-CP and the CU-UP), the DU, and the RU can implement different protocol layer functions.

Communication between the access network device and the terminal device may comply with a specific protocol layer structure. The protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

In an implementation example, as shown in FIG. 2, the access network device may include at least one CU and at least one DU. This design may be referred to as CU and DU separation. One CU may be connected to one or more DUs. The CU and the DU may be divided based on a protocol layer of a wireless network. For example, functions of a PDCP layer and a protocol layer (for example, an RRC layer and an SDAP layer) above the PDCP layer are set on the CU, and functions of a protocol layer (for example, an RLC layer, a MAC layer, and a PHY layer) below the PDCP layer are set on the DU. For another example, functions of a protocol layer above a PDCP layer are set on the CU, and functions of the PDCP layer and a protocol layer below the PDCP layer are set on the DU. This is not limited. Names of the CU and the DU are not limited in this application. For example, the CU may be referred to as a first access network element, and the DU may be referred to as a second access network element.

The division into the processing functions of the CU and the DU based on protocol layers is merely an example, and there may also be another division manner. For example, the CU or the DU may be divided to have functions of more protocol layers. Alternatively, the CU or the DU is divided to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, division into functions of the CU or the DU may be performed based on service types or other system requirements. For example, division may be performed based on delays. Functions whose processing time needs to meet a small delay requirement are set on the DU, and functions whose processing time does not need to meet the delay requirement are set on the CU.

The CU may be connected to a core network. Optionally, the CU may have some functions of the core network.

Further, some functions of the DU may be set separately. As shown in FIG. 2, this part of functions may be implemented by a radio unit (radio unit, RU). The RU may have a radio frequency function. A name of the RU is not limited in this application. For example, the RU may be referred to as a third access network element. The DU and the RU may be split or separated at the PHY layer. For example, the DU may implement a higher-layer function at the PHY layer, and the RU may implement a lower-layer function at the PHY layer or implement the lower-layer function and the radio frequency function. The higher-layer function at the PHY layer includes a function closer to the MAC layer, and the lower-layer function at the PHY layer includes a function closer to the radio frequency. There may be various possible manners of splitting between the DU and the RU. This is not limited. There is an interface between the DU and the RU. The interface between the DU and the RU may be a common public radio interface (common public radio interface, CPRI) or an enhanced common public radio interface (enhanced common public radio interface, eCPRI) based on different functions and/or division manners of the DU and the RU.

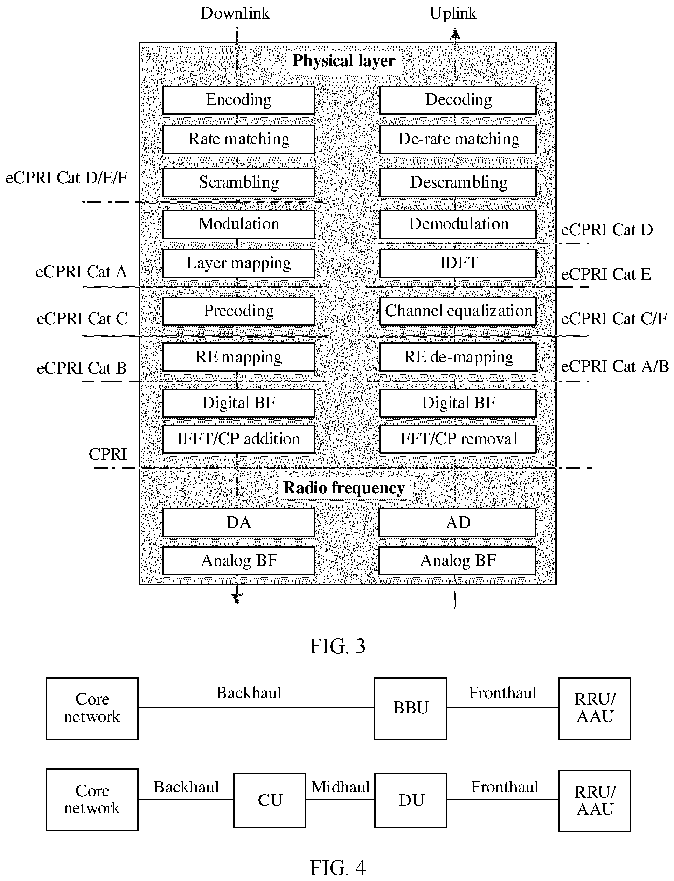

FIG. 3 is a diagram of an architecture of an access network device. As shown in FIG. 3, the access network device includes one or more functional modules. The one or more functional modules may be implemented by software, hardware, or a combination of software and hardware, and may be physically separated or may be integrated together. The access network device further includes a fronthaul (fronthaul, FH) interface between a DU and an RU, configured to implement communication between the DU and the RU. The fronthaul interface includes but is not limited to a CPRI or an eCPRI. In a possible implementation, the DU is located in a BBU, the RU is located in an RRU/AAU, and an interface between the BBU and the RRU/AAU may also be referred to as a fronthaul interface. Further, a function of the fronthaul interface may alternatively be implemented by using a fronthaul network.

In a possible design, for the CPRI shown in FIG. 3, for downlink transmission, the DU is configured to implement one or more of the following physical layer baseband functions: encoding, rate matching, scrambling, modulation, layer mapping, precoding, resource element (resource element, RE) mapping, digital beamforming (beamforming, BF), or inverse fast Fourier transform (inverse fast Fourier transformation, IFFT)/cyclic prefix (cyclic prefix, CP) addition. The RU is configured to implement one or more of the following radio frequency functions: digital-to-analog (digital-to-analog, DA) conversion or analog BF. For uplink transmission, the DU is configured to implement one or more of the following physical layer baseband functions: decoding, de-rate matching, descrambling, demodulation, inverse discrete Fourier transform (inverse discrete Fourier transformation, IDFT), channel equalization (or channel estimation), RE de-mapping, digital BF, or fast Fourier transform (fast Fourier transform, FFT)/CP removal. The RU is configured to implement one or more of the following radio frequency functions: analog-to-digital (analog-to-digital, AD) conversion or analog BF.

In another possible implementation, for the eCPRI shown in FIG. 3, in comparison with the CPRI, some downlink and/or uplink baseband functions are moved from the DU to the RU for implementation. In this case, the interface between the DU and the RU may also be referred to as lower layer split (lower layer split, LLS). In a possible design, the DU is located in the BBU, and the RU is located in the RRU/AAU. A processing unit that is configured to implement a baseband function and that is in the BBU is referred to as a baseband high (baseband high, BBH) unit, and a processing unit that is configured to implement a baseband function and that is in the RRU/AAU is referred to as a baseband low-layer (baseband low, BBL) unit.

FIG. 3 shows six possible implementations of the eCPRI. The six implementations are shown as a (category, Cat) A to a Cat F in the figure. The eCPRIs of different Cats may alternatively be described as eCPRIs of different types, eCPRIs of different options (options), or other possible names. In addition to the eCPRIs shown in FIG. 4, there may be an eCPRI of another type. This is not limited.

For the eCPRI Cat B and eCPRI Cat C shown in FIG. 3, uplink and downlink splitting of the eCPRIs may be symmetric. For example, for the eCPRI Cat B, for downlink transmission, the DU is configured to implement one or more functions of encoding, rate matching, scrambling, modulation, layer mapping, precoding, and RE mapping, and the RU is configured to implement one or more functions of digital BF, IFFT/CP addition, DA conversion, and analog BF. For uplink transmission, the DU is configured to implement one or more functions of decoding, de-rate matching, descrambling, demodulation, IDFT, channel equalization (or channel estimation), and RE de-mapping. The RU is configured to implement one or more functions of digital BF, FFT/CP removal, AD conversion, and analog BF. Descriptions of the eCPRI Cat C are similar, and details are not described again.

For the eCPRI Cat A, eCPRI Cat D, eCPRI Cat E, and eCPRI Cat F shown in FIG. 3, uplink and downlink splitting of the eCPRI may be asymmetric. This is not limited. For example, for the eCPRI Cat A, for downlink transmission, the DU is configured to implement one or more functions of encoding, rate matching, scrambling, modulation, or layer mapping, and the RU is configured to implement one or more functions of precoding, RE mapping, digital BF, IFFT/CP addition, DA conversion, and analog BF. For uplink transmission, the DU is configured to implement one or more functions of decoding, de-rate matching, descrambling, demodulation, IDFT, channel equalization (or channel estimation), and RE de-mapping. The RU is configured to implement one or more functions of digital BF, FFT/CP removal, AD conversion, and analog BF. Descriptions of the eCPRI Cat C are similar, and details are not described again. Descriptions of the Cat D, Cat E, and Cat F are similar, and details are not described again.

In recent years, with development of wireless communication technologies from 2G, 3G, and 4G to 5G, future 6G, and the like, for a network device (for example, the network device may be the base stations 110a and 110b in FIG. 1, the access network device in FIG. 2, or a physical layer module and a radio frequency module in FIG. 3), a communication standard executed by the network device also continuously evolves, and a requirement on a bearer capability of the network device is increasingly high. Currently, a longer networking chain may be configured in the network device, to enhance the bearer capability of the network device.

For example, FIG. 4 provides some implementation examples of device forms of the network device. For example, the network device may include a core network device, a BBU, and an RRU/AAU. A link between the core network device and the BBU may be referred to as a backhaul link, and a link between the BBU and the RRU/AAU may be referred to as a fronthaul link. For another example, the network device may include a core network device, a CU, a DU, and an RRU/AAU. A link between the core network device and the CU may be referred to as a backhaul link, a link between the CU and the DU may be referred to as a midhaul link, and a link between the DU and the RRU/AAU may be referred to as a fronthaul link.

An increase in a length of a networking chain in the network device may cause an increase in occurrence frequency of network faults. The fronthaul link is used as an example. Fronthaul link faults account for a large proportion in trouble tickets of a live network, generally exceeding 20%. The fronthaul link faults are main fault scenarios that carriers focus on. A networking chain in the fronthaul fault scenario is long. Most components on the fronthaul link are passive components and cannot perform active monitoring and obtain locating information. Consequently, fault processing time is long, and service experience and out-of-service duration are severely affected.

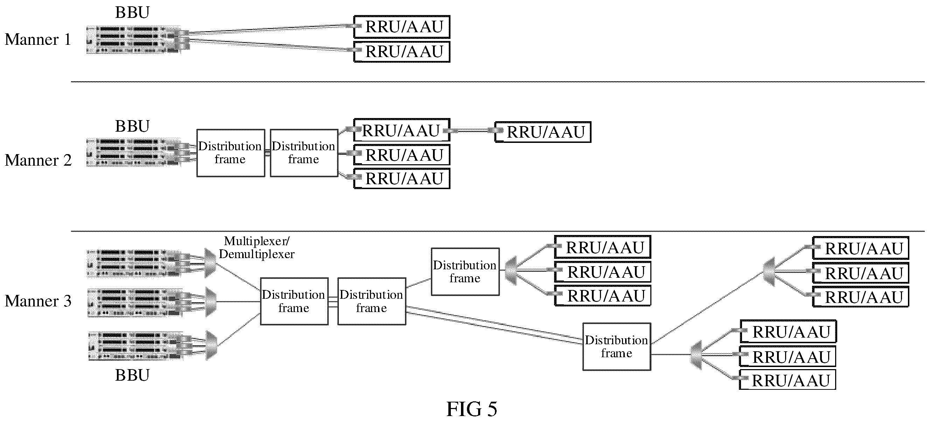

In an implementation example, as shown in FIG. 5, the fronthaul link has a plurality of implementations.

For example, in Manner 1, the BBU may be directly connected to one or more RRUs/AAUs via no distribution frame.

For another example, in Manner 2, the BBU may be connected to one or more RRUs/AAUs via distribution frames.

For another example, in Manner 3, the BBU may be connected to one or more RRUs/AAUs via components such as multiplexers/demultiplexers and distribution frames.

Currently, fault processing for the fronthaul problem is mainly performing onsite fault rectification based on log data in the live network, measurement of a professional device, and expert experience of agent maintenance personnel. A main pain point of this manner is that the operation and maintenance personnel generally use an optical power meter to perform measurement segment by segment and roughly determine a fault point based on an optical loss of each segment. This is time-consuming and labor-consuming.

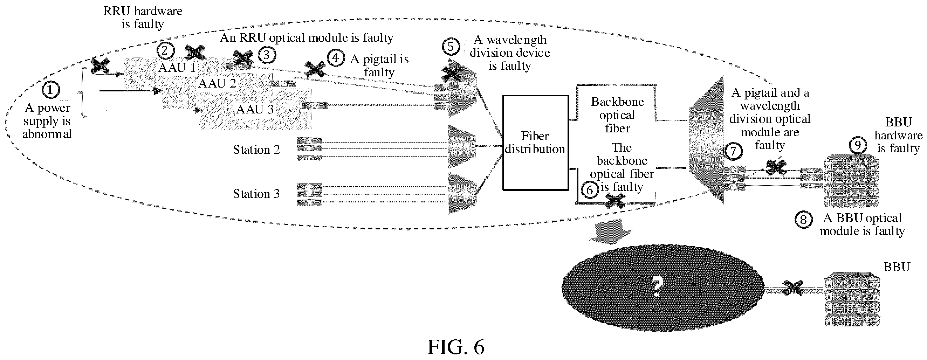

An implementation example is shown in FIG. 6. A plurality of cases of the fronthaul fault may occur, including but not limited to the cases shown in the figure: ① A power supply is abnormal; ② RRU hardware is abnormal; ③ an RRU optical module is faulty; ④ a pigtail is faulty; ⑤ a wavelength division device is faulty; ⑥ a backbone optical fiber is faulty; ⑦ a pigtail and a wavelength division optical module are faulty; ⑧ BBU hardware is faulty; ⑨ a BBU optical module is faulty; and the like. Once a fronthaul fault occurs, an entire fronthaul network becomes a black box. Consequently, fault rectification is difficult. As a result, the operation and maintenance personnel usually cannot truly find a potential risk or a fault point, and there is no effective solution to rectify and determine a problem. Consequently, a one-time resolution rate is low, and faults occur frequently and repeatedly.

In conclusion, when a fault occurs, because a component that is configured to perform transmission of a signal/process a signal and that is in the network device is generally a passive component, active fault locating cannot be performed, and further, manual fault rectification is needed. Consequently, the fault processing time is long, and operation and maintenance costs are greatly increased.

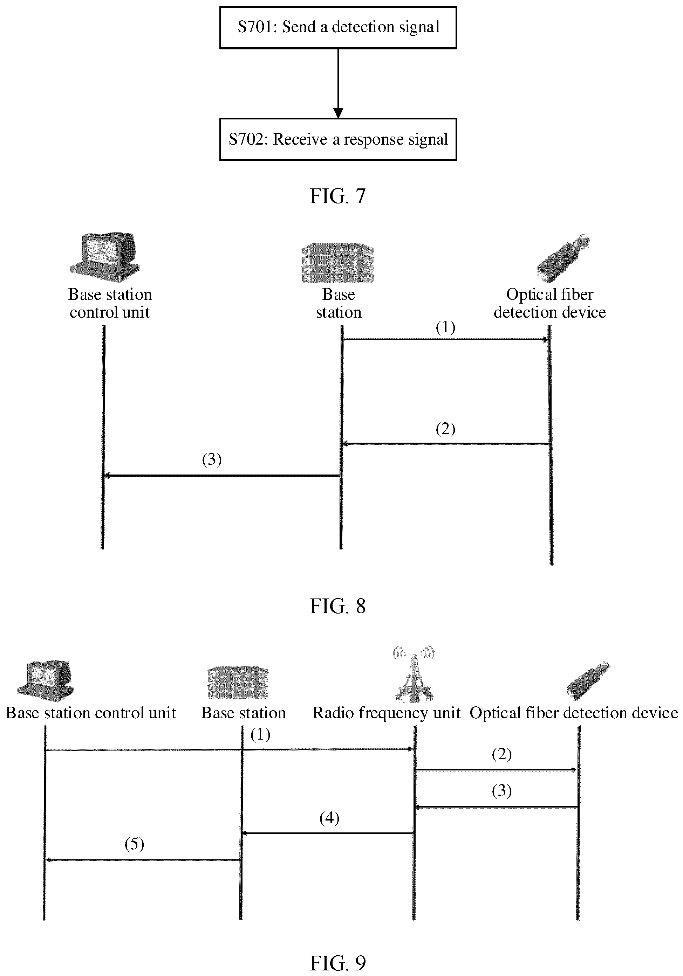

To resolve the foregoing problems, this application provides a signal processing method and a related device, so that when a fault occurs on a network link, an optical module can determine, in a process of receiving and sending a detection signal and a response signal, a faulty optical component on the link, to improve processing efficiency of fault locating and reduce the operation and maintenance costs. The following provides detailed descriptions with reference to FIG. 7.

S701: An optical module sends a detection signal.

In step S701, the detection signal sent by the optical module is carried on a link between a first module and a second module, and the link includes one or more optical components.

In a possible implementation, the detection signal is carried on the link between the first module and the second module, the first module is a radio frequency module in a network device, and the second module is a processing module in the network device. In this way, a link on which the optical module performs detection may be a link between a radio frequency module and a processing module in a same network device, so that the technical solutions can be applied to a scenario of locating a fault on a communication link between different modules in a same network device.

Optionally, the processing module is a baseband unit (baseband unit, BBU).

Optionally, the radio frequency module is any one of the following: a radio remote unit (radio remote unit, RRU), an active antenna unit (active antenna unit, AAU), or a remote relay node (remote relay node, RRN).

Further, optionally, when the radio frequency module is an RRU or an AAU, the link on which the optical module performs detection may be referred to as a fronthaul link. For example, in the fronthaul link scenario shown in FIG. 4, the link on which the optical module performs detection may further include the midhaul link (for example, the link between the CU and the DU), the backhaul link (for example, the link between the CU and the core network device, or the link between the BBU and the core network device), and the like.

Optionally, the technical solutions shown in FIG. 7 may be further applied to a detection process of another link, for example, may be applied to a link between any two of an optical line termination (optical line termination, OLT), an optical distribution network (optical distribution network, ODN), and an optical network apparatus (optical network terminal, ONT) in an optical access network. In other words, the first module and the second module are respectively two different modules in the OLT, the ODN, and the ONT. Correspondingly, in the optical access network, the optical components between the first module and the second module may include but are not limited to a fiber distribution terminal, an optical splitter, a fiber access terminal, and the like.

Optionally, when the first module is the radio frequency module in the network device, and the second module is the processing module in the network device, the radio frequency module is configured to process a radio frequency signal. The radio frequency module may be replaced with a radio frequency signal processing module, a radio frequency link module, a radio frequency processing module, or the like, or may have another name. This is not limited herein. Similarly, the processing module is configured to process a baseband signal. The processing module may be replaced with a baseband signal processing module, a baseband processing module, or the like, or may have another name. This is not limited herein.

Optionally, the processing module may alternatively be implemented in another manner. For example, the processing module is a network management device (for example, an OMC or a base station control unit), or the processing module is a management/control device externally connected to the optical module. This is not limited herein.

In a possible implementation, the method shown in FIG. 7 is applied to the optical module, where the optical module is a submodule in the first module, the optical module is a submodule in the second module, or the optical module is an optical time-domain reflectometer (optical time-domain reflectometer, OTDR).

It may be understood that the optical module is configured to send the detection signal and receive a response signal corresponding to the detection signal. In addition to the foregoing implementations, the optical module may alternatively be an optical fiber detection device (or referred to as an optical signal detection device) independent of the first module and the second module, or there may be another implementation. This is not limited herein.

In a possible implementation, the one or more optical components included in the link between the first module and the second module include at least one of the following: a flange, a wavelength division component, or an optical fiber line.

It may be understood that the one or more optical components are configured to perform transmission of an optical signal/process an optical signal. In addition to the at least one of the foregoing, the one or more optical components may further include another component, for example, a flexible connector, a fiber splicing point, a multiplexer, a demultiplexer, or a distribution frame. This is not limited herein.

In a possible implementation, the detection signal sent by the optical module in step S701 is generated based on a target parameter, where the target parameter is from a processing module in the network device or a network management device; or the target parameter is determined based on a user operation instruction. In this way, the target parameter used to generate the detection signal may be implemented in the foregoing plurality of manners, so that the optical module sends the specified detection signal based on another device or the user operation instruction, to achieve a detection target of the specified detection signal.

Optionally, the target parameter may be a parameter preconfigured in the optical module.

In a possible implementation, when the detection signal sent by the optical module in step S701 is generated based on the target parameter, the target parameter indicates at least one of the following: a first parameter, indicating a detection range; a second parameter, indicating a detection pulse width; or a third parameter, indicating detection duration.

Optionally, the target parameter is used to generate the detection signal. The at least one of the foregoing is merely an implementation example of the target parameter. During actual application, the target parameter may further include another implementation. For example, the target parameter indicates detection power, a wavelength of the detection signal, or a frequency of the detection signal.

In a possible implementation, when the detection signal sent by the optical module in step S701 is generated based on the target parameter, the target parameter is determined based on target information and/or a historical response signal, where the target information includes association information between one or more optical component faults and a signal feature.

Specifically, when the target parameter is determined based on the target information, the optical module can send the specified detection signal based on the target information, to achieve the detection target of the specified detection signal. For example, for different components on the link on which the first module and the second module are located, corresponding different detection parameters may be configured, to implement fault detection on a specified component.

In addition, when the target parameter is determined based on the historical response signal, the optical module can adjust and optimize a detection signal sending process based on a detection result indicated by the historical response signal, to obtain an expected detection response. For example, based on a data analysis result of the historical corresponding signal, for example, an optical fiber length, a quantity of connectors, and a quantity of fault points, a processing unit dynamically adjusts an echo detection parameter (for example, a detection frequency, a detection pulse width, and power), to implement targeted fault detection.

With reference to some implementation examples, the following describes an implementation process of the target parameter by using examples. In the following examples, an example in which the target parameter includes the detection pulse width is used for description.

Implementation example 1: The target parameter is determined based on the target information.

When the link on which the first module and the second module are located runs normally (or when no fault occurs, or when the link is in a healthy state), a first detection pulse width for performing detection on the link is determined. Then, the first detection pulse width is adjusted in an artificial intelligence (artificial intelligence, AI) processing manner (or in an expert experience marking manner, a machine self-learning manner, or the like), to obtain a second detection pulse width. When a fault occurs on one or more optical components on the link, the second detection pulse width indicates a detection pulse width needed for detecting the fault.

In other words, the target parameter may include the second detection pulse width, so that detection on the one or more optical component faults can be subsequently implemented based on the second detection pulse width.

Implementation example 2: The target parameter is determined based on the historical response signal.

After a response signal corresponding to one or more proximate detection processes (that is, the historical response signal) is received on the link on which the first module and the second module are located, a third detection pulse width used in the one or more adjacent detection processes is adjusted with reference to a signal feature of the response signal, to obtain a fourth detection pulse width. In this way, when a fault location cannot be determined in the historical detection processes implemented based on the third detection pulse width, the fourth detection pulse width is obtained by adjusting the third detection pulse width, to implement fault locating based on the fourth detection pulse width.

Optionally, the third detection pulse width may be adjusted in an AI processing manner, an expert experience marking manner, a machine self-learning manner, or the like, to obtain the fourth detection pulse width.

For example, first, sending is performed by using a specific large pulse width (that is, the third detection pulse width), to obtain large energy, so that sending is performed farther, and a large topology structure is depicted, for example, a BBU part, an RRU part, and a middle part: backbone optical fiber. Then, a proper small pulse width (that is, the fourth detection pulse width) is selected based on lengths of the restored three segments, for sending, and then components at a finer granularity in the BBU part or the RRU part are depicted, for example, an optical module, a pigtail, and a distribution frame, to implement fault locating when a fault occurs.

Implementation example 3: The target parameter is determined based on the target information and the historical response signal.

Implementation example 3 may be implemented based on a combination of Implementation example 1 and Implementation example 2. In other words, the third detection pulse width in Implementation example 2 may be the second detection pulse width in Implementation example 1. In other words, the third detection pulse width in Implementation example 2 is obtained based on the first detection pulse width. For an implementation process of Implementation example 3, refer to the descriptions in the foregoing Implementation example 1 and Implementation example 2.

In a possible implementation, the detection signal sent by the optical module in step S701 is a signal whose sending is triggered based on a periodicity, and/or the detection signal is a signal whose sending is triggered based on an event. In this way, the optical module may trigger sending of the detection signal in either of the foregoing manners, to improve flexibility of implementing the solutions.

S702: The optical module receives the response signal.

In step S702, the optical module receives the response signal of the detection signal sent in step S701, where the response signal is used to determine fault information of the link, and the fault information of the link indicates a faulty optical component in the one or more optical components.

In a possible implementation, that the response signal is used to determine fault information of the link includes: The fault information of the link is determined based on the signal feature of the response signal and the target information, where the target information includes the association information between the fault of the one or more optical components and the signal feature. Specifically, in addition to the response signal, a determining basis of the fault information of the link may further include the target information, and the target information includes the association information between the fault of the one or more optical components and the signal feature, so that the faulty optical component is located based on the signal feature of the response signal and with reference to the association information.

For example, in a process of determining the target information, a plurality of detection processes may be performed in advance, and after signal features that correspond to different components (such as the flexible connector, the fiber splicing point, and the multiplexer/demultiplexer) on the link when faults occur on the different components are identified, feature identification and modeling are performed based on signal feature information and component fault information in the plurality of detection processes, to restore association information between a faulty component in a link topology and a signal feature, so as to determine the target information.

According to the technical solutions shown in FIG. 7, after the optical module sends the detection signal carried on the link between the first module and the second module in step S701, the response signal received by the optical module in step S702 is used to determine the fault information of the link. The link includes one or more optical components, and the fault information of the link indicates a faulty optical component in the one or more optical components. In this way, when a fault occurs on a network link the optical module can determine, in a process of receiving and sending the detection signal and the response signal, the faulty optical component on the link, to improve processing efficiency of fault locating and reduce operation and maintenance costs.

In a possible implementation, in FIG. 7, after the optical module receives the response signal in step S702, the method may further include: The optical module sends a first signal, where the first signal indicates at least one of the following: the response signal, a processing result obtained by performing signal preprocessing on the response signal, or the fault information. Specifically, after receiving the response signal, the optical module may further send the first signal associated with the response signal, so that after receiving the first signal, a receiving party of the first signal can implement fault locating based on the first signal, and subsequently may further perform a fault rectification operation based on a located fault, to eliminate or reduce impact of the fault.

Optionally, the signal preprocessing includes at least one of the following: noise removal, filtering, or signal combination. It may be understood that the signal preprocessing is used to perform preprocessing other than fault locating on the response signal received by the optical module. In addition to the at least one of the foregoing, the preprocessing may further include signal smoothing processing or another implementation. This is not limited herein.

It should be understood that the receiving party of the first signal from the optical module may be a processing module. As shown in step S701, the processing module may be a BBU, the processing module is a network management device (for example, an OMC or a base station control unit), or the processing module is a management/control device externally connected to the optical module. This is not limited herein.

In a possible implementation, after receiving the first signal, the processing module may further send first information, where the first information indicates to perform the fault rectification operation on the one or more optical components indicated by the fault information. Specifically, after receiving the first signal and determining the fault information, the processing module may further send the first information indicating the one or more optical components indicated by the fault information to perform the fault rectification operation, so that a receiving party of the first information performs fault rectification based on the first information.

Optionally, the fault rectification operation includes reset, shutdown, or restart. It may be understood that, the first information indicates to perform the fault rectification operation on the one or more optical components indicated by the fault information. When the receiving party of the first information is the faulty optical component (or a controller/management device of the faulty optical component), the fault rectification operation includes controlling the faulty optical component to perform reset, shutdown, restart, or the like. When the receiving party of the first information is another component (for example, a standby component), the fault rectification operation includes controlling the another component to perform reset, startup, or the like.

In an implementation example, the following describes the foregoing implementation process by using examples shown in FIG. 8 and FIG. 9, where the processing module is a base station control unit, the optical module is an optical fiber detection device, the first module is a BBU, and the second module is an RRU.

In an example shown in FIG. 8, an optical fiber detection device may perform a downlink detection process between a BBU and an RRU. The following steps are included.

Step 1: A base station sends indication information to the optical fiber detection device, where the indication information indicates the optical fiber detection device to send a detection signal between the BBU and the RRU.

In a possible implementation, the optical fiber detection device may be a sub-device (or referred to as a submodule) in the BBU in the base station. Therefore, in step 1, a base station control unit may send the indication information to the optical fiber detection device in the base station in a periodic triggering (or event triggering) manner, to indicate the optical fiber detection device to start detection.

Optionally, if the periodic triggering manner is used, the base station control unit may determine time information related to a periodicity in a preconfiguration manner or a manner of manual configuration by operation and maintenance personnel.

Optionally, if the event triggering manner is used, an event may include but is not limited to that the base station control unit determines that key performance indicator (key performance indicator, KPI) data of the base station is abnormal, that the base station control unit receives fault alarm information from the base station, or the like. This is not limited herein.

Optionally, the indication information in step 1 may include a target parameter. For an implementation process of the target parameter, refer to the descriptions in the foregoing embodiment. Details are not described herein again.

Step 2: After performing the detection process based on the indication information and obtaining a response signal corresponding to the detection signal, the optical fiber detection device sends a first signal to the base station.

It may be understood that, for an implementation process of the first signal, refer to the descriptions in the foregoing embodiment. Details are not described herein again.

Step 3: The base station forwards the first signal to the base station control unit, so that the base station control unit determines, based on the first signal, a faulty optical component on a link between the BBU and the RR.

In an example shown in FIG. 9, an optical fiber detection device may perform an uplink detection process between an RRU and a BBU. The following steps are included.

Step 1: A base station control unit sends indication information to the RRU (denoted as a radio frequency unit) via a base station, where the indication information indicates the optical fiber detection device to send a detection signal between the RRU and the BBU.

Step 2: The radio frequency unit forwards the indication information to the optical fiber detection device.

In a possible implementation, the optical fiber detection device may be a sub-device (or referred to as a submodule) in the RRU in the base station. Therefore, in step 1 and step 2, the base station control unit may send the indication information to the optical fiber detection device via the radio frequency unit of the base station in a periodic triggering (or event triggering) manner, to indicate the optical fiber detection device to start detection.

Optionally, if the periodic triggering manner is used, the base station control unit may determine time information related to a periodicity in a preconfiguration manner or a manner of manual configuration by operation and maintenance personnel.

Optionally, if the event triggering manner is used, an event may include but is not limited to that the base station control unit determines that key performance indicator (key performance indicator, KPI) data of the base station is abnormal, that the base station control unit receives fault alarm information from the base station, or the like. This is not limited herein.

Optionally, the indication information received by the optical fiber detection device in step 2 may include a target parameter. For an implementation process of the target parameter, refer to the descriptions in the foregoing embodiments. Details are not described herein again.

Step 3: After performing the detection process based on the indication information and obtaining a response signal corresponding to the detection signal, the optical fiber detection device sends a first signal to the radio frequency unit.

Step 4: The radio frequency unit forwards the first signal to the base station.

Step 5: The base station forwards the first signal to the base station control unit, so that the base station control unit determines, based on the first signal, a faulty optical component on a link between the BBU and the RR.

It can be learned from the foregoing implementation process that the optical fiber detection device having an echo detection capability can send the detection signal and receive the response signal (that is, send an optical pulse and receive an echo) based on the indication information of the base station control unit, and send the first signal corresponding to the received response signal to the base station control unit. Then, after receiving the first signal, the base station control unit can perform, based on the first signal, modeling and restoration on a topology and a component of a fronthaul link by using a related algorithm, and determine a location of a fault point, to improve processing efficiency of fault locating and reduce operation and maintenance costs.

To implement functions in the methods provided in this application, a device that performs the methods may include a hardware structure and/or a software module, and implement the foregoing functions in a form of the hardware structure, the software module, or a combination of the hardware structure and the software module. Whether a function in the foregoing functions is performed by the hardware structure, the software module, or the combination of the hardware structure and the software module depends on specific applications and design constraints of the technical solutions.

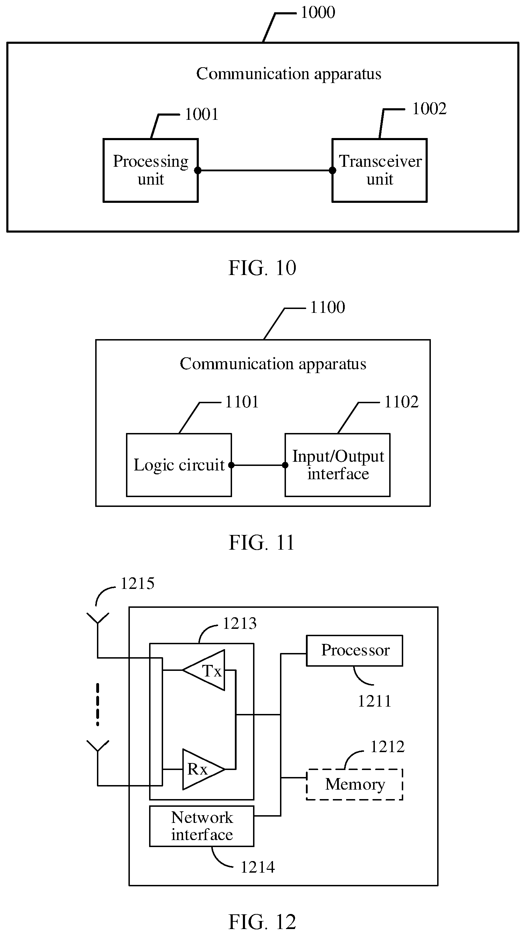

Refer to FIG. 10. An embodiment of this application provides a communication apparatus 1000. The apparatus 1000 includes a processing unit 1001.

Optionally, the apparatus further includes a transceiver unit 1002.

In an implementation example, the communication apparatus 1000 may implement functions of the optical module in the foregoing method embodiments, and therefore can also implement beneficial effects of the foregoing method embodiments. In this application, the communication apparatus 1000 may be an optical module, or may be a software module, an integrated circuit, an element, or the like in the optical module, for example, a chip. This is not limited. The following uses an example in which the communication apparatus 1000 is an optical module for description.

Specifically, the processing unit 1001 is configured to determine a detection signal, where the detection signal is carried on a link between a first module and a second module, and the link includes one or more optical components. The transceiver unit 1002 is configured to send the detection signal. The transceiver unit 1002 is further configured to receive a response signal of the detection signal, where the response signal is used to determine fault information of the link, and the fault information of the link indicates a faulty optical component in the one or more optical components.

In a possible implementation, that the response signal is used to determine fault information of the link includes: The fault information of the link is determined based on a signal feature of the response signal and target information, where the target information includes association information between a fault of one or more optical components and a signal feature.

In a possible implementation, the first module is a radio frequency module in a network device, and the second module is a processing module in the network device.

In a possible implementation, the one or more optical components include at least one of the following: a flange, a wavelength division component, or an optical fiber line.

In a possible implementation, the transceiver unit 1002 is further configured to send a first signal, where the first signal indicates at least one of the following: the response signal, a processing result obtained by performing signal preprocessing on the response signal, or the fault information.

In a possible implementation, the signal preprocessing includes at least one of the following: noise removal, filtering, or signal combination.

In a possible implementation, the detection signal is generated based on a target parameter, where the target parameter is from a processing module in the network device or a network management device; or the target parameter is determined based on a user operation instruction.

In a possible implementation, the target parameter indicates at least one of the following: a first parameter, indicating a detection range; a second parameter, indicating a detection pulse width; or a third parameter, indicating detection duration.

In a possible implementation, the target parameter is determined based on the target information and/or a historical response signal, where the target information includes the association information between the fault of the one or more optical components and the signal feature.

In a possible implementation, the method is applied to the optical module, where the optical module is a submodule in the first module, the optical module is a submodule in the second module, or the optical module is an optical time-domain reflectometer OTDR.

In another implementation example, the communication apparatus 1000 may implement functions of the processing module in the foregoing method embodiments, and therefore can also implement beneficial effects of the foregoing method embodiments. In this application, the communication apparatus 1000 may be a processing module, or may be a software module, an integrated circuit, an element, or the like in the processing module, for example, a chip. This is not limited. The following uses an example in which the communication apparatus 1000 is a processing module for description.

Specifically, the transceiver unit 1002 is configured to receive a first signal, where the first signal indicates at least one of the following: a response signal, where the response signal is a response to a detection signal, the detection signal is carried on a link between a first module and a second module, the link includes one or more optical components, the response signal is used to determine fault information of the link, and the fault information of the link indicates that a fault occurs on the one or more optical components; a processing result obtained by performing signal preprocessing on the response signal; or the fault information.

In a possible implementation, the apparatus further includes the processing unit 1001. The processing unit 1001 is configured to determine first information. The transceiver unit 1002 is further configured to send the first information, where the first information indicates to perform a fault rectification operation on the one or more optical components indicated by the fault information.

In a possible implementation, the fault rectification operation includes reset, shutdown, or restart.

In a possible implementation, that the response signal is used to determine fault information of the link includes: The fault information of the link is determined based on a signal feature of the response signal and target information, where the target information includes association information between a fault of one or more optical components and a signal feature.

In a possible implementation, the first module is a radio frequency module in a network device, and the second module is a processing module in the network device.

In a possible implementation, the one or more optical components include at least one of the following: a flange, a wavelength division component, or an optical fiber line.

In a possible implementation, the signal preprocessing includes at least one of the following: noise removal, filtering, or signal combination.

In a possible implementation, the detection signal is generated based on a target parameter, where the target parameter is from a processing module in the network device or a network management device; or the target parameter is determined based on a user operation instruction.

In a possible implementation, the target parameter indicates at least one of the following: a first parameter, indicating a detection range; a second parameter, indicating a detection pulse width; or a third parameter, indicating detection duration.

In a possible implementation, the target parameter is determined based on the target information and/or a historical response signal, where the target information includes the association information between the fault of the one or more optical components and the signal feature.

In a possible implementation, the method is applied to an optical module, where the optical module is a submodule in the first module, the optical module is a submodule in the second module, or the optical module is an optical time-domain reflectometer OTDR.

It should be noted that for details of content such as an information execution process of the unit of the communication apparatus 1000, refer to descriptions in the foregoing method embodiments of this application. Details are not described herein again.

FIG. 11 is another diagram of a structure of a communication apparatus 1100 according to this application. The communication apparatus 1100 includes at least a logic circuit 1101. The communication apparatus 1100 may be a chip or an integrated circuit.

Optionally, the communication apparatus further includes an input/output interface 1102.

The transceiver unit 1002 shown in FIG. 10 may be a communication interface. The communication interface may be the input/output interface 1102 in FIG. 11, and the input/output interface 1102 may include an input interface and an output interface. Alternatively, the communication interface may be a transceiver circuit, and the transceiver circuit may include an input interface circuit and an output interface circuit.

Optionally, the input/output interface 1102 may send a detection signal, where the detection signal is carried on a link between a first module and a second module, and the link includes one or more optical components. The input/output interface 1102 may further receive a response signal of the detection signal, where the response signal is used to determine fault information of the link, and the fault information of the link indicates a faulty optical component in the one or more optical components. The logic circuit 1101 and the input/output interface 1102 may further perform other steps performed by the optical module in any one of the foregoing examples and implement corresponding beneficial effects. Details are not described herein again.

Optionally, the input/output interface 1102 may receive a first signal, where the first signal indicates at least one of the following: a response signal, where the response signal is a response to a detection signal, the detection signal is carried on a link between a first module and a second module, the link includes one or more optical components, the response signal is used to determine fault information of the link, and the fault information of the link indicates that a fault occurs on the one or more optical components; a processing result obtained by performing signal preprocessing on the response signal; or the fault information. The logic circuit 1101 and the input/output interface 1102 may further perform other steps performed by the processing module in any one of the foregoing examples and implement corresponding beneficial effects. Details are not described herein again.

In a possible implementation, the processing unit 1001 shown in FIG. 10 may be the logic circuit 1101 in FIG. 11.

Optionally, the logic circuit 1101 may be a processing apparatus, and some or all functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus. The processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field programmable gate arrays (field programmable gate arrays, FPGAs), application-specific integrated chips (application-specific integrated circuits, ASICs), system on chips (system on chips, SoCs), central processing units (central processing units, CPUs), network processors (network processors, NPs), digital signal processing circuits (digital signal processors, DSPs), micro controller units (micro controller units, MCUs), programmable controllers (programmable logic devices, PLDs), or another integrated chip, or any combination of the foregoing chips or processors.

FIG. 12 is a diagram of a structure of a communication apparatus 1200 in the foregoing examples according to this application. The communication apparatus 1200 may be specifically the communication apparatus used as the optical module or the processing module in the foregoing examples. For a structure of the communication apparatus, refer to the structure shown in FIG. 12.

The communication apparatus 1200 includes at least one processor 1211 and at least one network interface 1214.

Further, optionally, the communication apparatus further includes at least one memory 1212, at least one transceiver 1213, and one or more antennas 1215. The processor 1211, the memory 1212, the transceiver 1213, and the network interface 1214 are connected, for example, through a bus. In this application, the connection may include various interfaces, transmission lines, buses, or the like. This is not limited in this embodiment. The antenna 1215 is connected to the transceiver 1213. The network interface 1214 is configured to enable the communication apparatus to communicate with another communication device through a communication link. For example, the network interface 1214 may include a network interface between the communication apparatus and a core network device, for example, an S1 interface. The network interface may include a network interface between the communication apparatus and another communication apparatus (for example, another network device or a core network device), for example, an X2 or Xn interface.

The processor 1211 is mainly configured to: process a communication protocol and communication data, control the entire communication apparatus, execute a software program, and process data of the software program, for example, is configured to support the communication apparatus in performing actions described embodiments. The communication apparatus may include a baseband processor and a central processing unit. The baseband processor is mainly configured to process the communication protocol and the communication data. The central processing unit is mainly configured to control an entire terminal device, execute a software program, and process data of the software program. Functions of the baseband processor and the central processing unit may be integrated into the processor 1211 in FIG. 12. A person skilled in the art may understand that the baseband processor and the central processing unit each may be an independent processor, and are interconnected by using a technology such as a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

The memory is mainly configured to store the software program and the data. The memory 1212 may exist independently, and is connected to the processor 1211. Optionally, the memory 1212 may be integrated with the processor 1211, for example, integrated into one chip. The memory 1212 can store program code for executing the technical solutions in embodiments of this application, and the processor 1211 controls execution of the program code. Various types of executed computer program code may also be considered as drivers of the processor 1211.

FIG. 12 shows only one memory and one processor. In an actual network device, there may be a plurality of processors and a plurality of memories. The memory may also be referred to as a storage medium, a storage device, or the like. The memory may be a storage element located on a same chip as the processor, namely, an on-chip storage element, or an independent storage element. This is not limited in this embodiment of this application.

The transceiver 1213 may be configured to support receiving or sending of a radio frequency signal between the communication apparatus and the terminal, and the transceiver 1213 may be connected to the antenna 1215. The transceiver 1213 includes a transmitter Tx and a receiver Rx. Specifically, the one or more antennas 1215 may receive a radio frequency signal. The receiver Rx of the transceiver 1213 is configured to: receive the radio frequency signal from the antenna, convert the radio frequency signal into a digital baseband signal or a digital intermediate frequency signal, and provide the digital baseband signal or the digital intermediate frequency signal for the processor 1211, so that the processor 1211 further processes the digital baseband signal or the digital intermediate frequency signal, for example, performs demodulation processing and decoding processing. In addition, the transmitter Tx of the transceiver 1213 is further configured to: receive a modulated digital baseband signal or digital intermediate frequency signal from the processor 1211, convert the modulated digital baseband signal or digital intermediate frequency signal into a radio frequency signal, and send the radio frequency signal through the one or more antennas 1215. Specifically, the receiver Rx may selectively perform one-level or multi-level down frequency mixing processing and analog-to-digital conversion processing on the radio frequency signal, to obtain the digital baseband signal or the digital intermediate frequency signal. A sequence of the down frequency mixing processing and the analog-to-digital conversion processing is adjustable. The transmitter Tx may selectively perform one-level or multi-level up frequency mixing processing and digital-to-analog conversion processing on the modulated digital baseband signal or digital intermediate frequency signal, to obtain the radio frequency signal. A sequence of the up frequency mixing processing and the digital-to-analog conversion processing is adjustable. The digital baseband signal and the digital intermediate frequency signal may be collectively referred to as digital signals.

The transceiver 1213 may also be referred to as a transceiver unit, a transceiver machine, a transceiver apparatus, or the like. Optionally, a component that is configured to implement a receiving function and that is in the transceiver unit may be considered as a receiving unit. A component that is configured to implement a sending function and that is in the transceiver unit may be considered as a sending unit. In other words, the transceiver unit includes the receiving unit and the sending unit. The receiving unit may also be referred to as a receiver, an input port, a receiving circuit, or the like. The sending unit may be referred to as a transmitter, a transmitter machine, a transmitting circuit, or the like.

It should be noted that the communication apparatus 1200 shown in FIG. 12 may be specifically configured to: implement the steps implemented by the optical module or the processing module in the foregoing method embodiments, and implement technical effects corresponding to the optical module or the processing module. For a specific implementation of the communication apparatus 1200 shown in FIG. 12, refer to the descriptions in the foregoing method embodiments. Details are not described herein again.

Division into modules in this application is an example, and is merely logical function division. During actual implementation, there may be another division manner. In addition, functional modules in this application may be integrated into one processor, or may exist alone physically, or two or more modules may be integrated into one module. The integrated module may be implemented in a form of hardware, or may be implemented in a form of a software functional module.

All or some of the technical solutions provided in this application may be implemented by software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, on a premise that there is no logical contradiction, examples may be mutually referenced. For example, methods and/or terms in the method examples may be mutually referenced, functions and/or terms in the apparatus examples may be mutually referenced, and functions and/or terms in the apparatus examples and the method examples may be mutually referenced.

It is clear that a person skilled in the art can make various modifications and variations to this application without departing from the scope of this application. In this way, this application is intended to cover these modifications and variations of this application provided that they fall within the scope of the claims of this application and equivalent technologies thereof.

## Claims

1. A signal processing method, comprising:
sending a detection signal, wherein the detection signal is carried on a link between a first module and a second module, and the link comprises one or more optical components; and
receiving a response signal of the detection signal, wherein the response signal is used to determine fault information of the link, and the fault information of the link indicates a faulty optical component in the one or more optical components.

2. The method according to claim 1, wherein that the response signal is used to determine fault information of the link comprises:
the fault information of the link is determined based on a signal feature of the response signal and target information, wherein the target information comprises association information between a fault of one or more optical components and a signal feature.

3. The method according to claim 1 or 2, wherein the first module is a radio frequency module in a network device, and the second module is a processing module in the network device.

4. The method according to claim 3, wherein the one or more optical components comprise at least one of the following:
a flange, a wavelength division component, or an optical fiber line.

5. The method according to any one of claims 1 to 4, wherein the method further comprises:
sending a first signal, wherein the first signal indicates at least one of the following:
the response signal;
a processing result obtained by performing signal preprocessing on the response signal; or
the fault information.

6. The method according to claim 5, wherein the signal preprocessing comprises at least one of the following:
noise removal, filtering, or signal combination.

7. The method according to any one of claims 1 to 6, wherein the detection signal is generated based on a target parameter, wherein
the target parameter is from a processing module in the network device or a network management device; or the target parameter is determined based on a user operation instruction.

8. The method according to claim 7, wherein the target parameter indicates at least one of the following:
a first parameter, indicating a detection range;
a second parameter, indicating a detection pulse width; or
a third parameter, indicating detection duration.

9. The method according to claim 7 or 8, wherein the target parameter is determined based on target information and/or a historical response signal, wherein
the target information comprises the association information between the fault of the one or more optical components and the signal feature.

10. The method according to any one of claims 1 to 9, wherein the method is applied to an optical module, the optical module is a submodule in the first module, the optical module is a submodule in the second module, or the optical module is an optical time-domain reflectometer OTDR.

11. A signal processing method, comprising:
receiving a first signal, wherein the first signal indicates at least one of the following:
a response signal, wherein the response signal is a response to a detection signal, the detection signal is carried on a link between a first module and a second module, the link comprises one or more optical components, the response signal is used to determine fault information of the link, and the fault information of the link indicates that a fault occurs on the one or more optical components;
a processing result obtained by performing signal preprocessing on the response signal; or
the fault information.

12. The method according to claim 11, wherein the method further comprises:
sending first information, wherein the first information indicates to perform a fault rectification operation on the one or more optical components indicated by the fault information.

13. The method according to claim 12, wherein the fault rectification operation comprises:
reset, shutdown, or restart.

14. The method according to any one of claims 11 to 13, wherein that the response signal is used to determine fault information of the link comprises:
the fault information of the link is determined based on a signal feature of the response signal and target information, wherein the target information comprises association information between a fault of one or more optical components and a signal feature.

15. The method according to any one of claims 11 to 14, wherein the first module is a radio frequency module in a network device, and the second module is a processing module in the network device.

16. The method according to claim 15, wherein the one or more optical components comprise at least one of the following:
a flange, a wavelength division component, or an optical fiber line.

17. The method according to any one of claims 11 to 16, wherein the signal preprocessing comprises at least one of the following:
noise removal, filtering, or signal combination.

18. The method according to any one of claims 11 to 17, wherein the detection signal is generated based on a target parameter, wherein
the target parameter is from a processing module in the network device or a network management device; or the target parameter is determined based on a user operation instruction.

19. The method according to claim 18, wherein the target parameter indicates at least one of the following:
a first parameter, indicating a detection range;
a second parameter, indicating a detection pulse width; or
a third parameter, indicating detection duration.

20. The method according to claim 18 or 19, wherein the target parameter is determined based on target information and/or a historical response signal, wherein
the target information comprises the association information between the fault of the one or more optical components and the signal feature.

21. The method according to any one of claims 11 to 20, wherein the method is applied to an optical module, the optical module is a submodule in the first module, the optical module is a submodule in the second module, or the optical module is an optical time-domain reflectometer OTDR.

22. A communication apparatus, comprising a processing unit, wherein the processing unit is configured to perform the method according to any one of claims 1 to 21.

23. A communication apparatus, comprising at least one processor and a memory, wherein the at least one processor is coupled to the memory, and the processor is configured to perform the method according to any one of claims 1 to 21.

24. A computer-readable storage medium, wherein the medium stores instructions, and when the instructions are executed by a computer, the method according to any one of claims 1 to 21 is implemented.

25. A computer program product, comprising instructions, wherein when the instructions are run on a computer, the computer is enabled to perform the method according to any one of claims 1 to 21.
